# EUROPÄISCHE PATENTSCHRIFT

(11) **EP 2 181 341 B1**
(45) Veröffentlichungstag und Bekanntmachung des Hinweises auf die Patenterteilung: **24.08.2016**
(21) Anmeldenummer: 08774267.2
(22) Anmeldetag: 25.06.2008
(51) Int. Cl.: G01S 7/03, G01S 13/93, G01S 13/00

(54) **MONOSTATISCHER MEHRSTRAHLRADARSENSOR FÜR KRAFTFAHRZEUGE**
MONOSTATIC MULTI-BEAM RADAR SENSOR FOR MOTOR VEHICLES
DÉTECTEUR RADAR MONOSTATIQUE MULTIFAISCEAU POUR VÉHICULES AUTOMOBILES

(30) Priorität: 16.08.2007 DE 102007038513
(43) Veröffentlichungstag der Anmeldung: 05.05.2010
(73) Patentinhaber: Robert Bosch GmbH, 70442 Stuttgart (DE)
(72) Erfinder: KLAR, Michael, 71106 Magstadt (DE); BINZER, Thomas, 70565 Stuttgart (DE); STEINBUCH, Dirk, 71299 Wimsheim (DE); FREUNDT, Dirk, 70825 Korntal-Muenchingen (DE); LUCAS, Bernhard, 74354 Besigheim (DE)
(86) Internationale Anmeldenummer: PCT/EP2008/058049
(87) Internationale Veröffentlichungsnummer: WO 2009/021768

(56) Entgegenhaltungen:
- EP-A- 1 345 044
- EP-A- 1 610 148
- EP-A- 1 804 074
- WO-A-2007/077062
- US-A1- 2004 027 305

## Beschreibung

### Stand der Technik

Die Erfindung betrifft einen Radarsensor für Kraftfahrzeuge, mit mehreren Sende- und Empfangsantennen, die sich in ihrer azimutalen Richtcharakteristik unterscheiden und denen jeweils ein Mischer zugeordnet ist, der ein Sendesignal mit einem empfangenen Signal mischt, wobei mindestens einer der Mischer ein Transfermischer ist und mindestens ein anderer der Mischer eine geringere Transferleistung hat.

Radarsensoren werden in Kraftfahrzeugen in Verbindung mit Fahrerassistenzsystemen dazu eingesetzt, Objekte im Umfeld des Fahrzeugs, insbesondere vorausfahrende andere Fahrzeuge, zu orten und deren Abstände und Relativgeschwindigkeiten zu messen. Aufgrund der Ortungsdaten eines solchen Radarsensors ist es beispielsweise bei einem ACC-System (Adaptive Cruise Control) möglich, die Geschwindigkeit des eigenen Fahrzeugs nicht nur automatisch auf eine bestimmte Wunschgeschwindigkeit zu regeln, sondern, sofern ein vorausfahrendes Fahrzeug geortet wird, auch automatisch an die Geschwindigkeit des vorausfahrenden Fahrzeugs anzupassen, so daß dieses Fahrzeug in einem angemessenen Sicherheitsabstand verfolgt wird. Ein anderes Anwendungsbeispiel für Radarsensoren in Kraftfahrzeugen sind prädiktive Sicherheitssysteme (PSS), die dazu dienen, eine drohende Kollision möglichst frühzeitig zu erkennen und automatisch Maßnahmen einzuleiten, mit denen die Kollision möglichst abgewendet wird oder zumindest die Folgen der Kollision weitestgehend gemildert werden.

Radarsensoren, bei denen ein und dasselbe Antennenelement sowohl zum Senden des Radarsignals als auch zum Empfang des an einem Objekt reflektierten Signals dient, werden als monostatische Radarsensoren bezeichnet. Ein zugeordneter Mischer dient dazu, einen Teil des Sendesignals mit dem empfangenen Signal zu mischen und so ein Zwischenfrequenzsignal zu erzeugen, dessen Frequenz dem Frequenzunterschied zwischen dem gesendeten und dem empfangenen Signal entspricht. Dieser Frequenzunterschied ist aufgrund des Doppler-Effektes von der Relativgeschwindigkeit des reflektierenden Objekts abhängig. Bei einem Radarsystem, bei dem die Frequenz des Sendesignals fortlaufend moduliert wird, beispielsweise bei einem FMCW-Radar (Frequency Modulated Continuous Wave), ist der Frequenzunterschied darüber hinaus auch von der Laufzeit des Signals abhängig, so daß es mit bekannten Auswertungstechniken möglich ist, aus dem Ortungssignal eines Objekts sowohl diesen Abstand als auch die Relativgeschwindigkeit abzuleiten.

Ein Mehrstrahlradarsensor mit mehreren Sende- und Empfangsantennen, die sich in ihrer azimutalen Richtcharakteristik unterscheiden, erlaubt darüber hinaus auch eine Bestimmung des Azimutwinkels der georteten Objekte. Zur Beeinflussung der Richtcharakteristik kann beispielsweise eine für Radarwellen brechende optische Linse vorgesehen sein, und/oder es können Beugungs- und Interferenzeffekte der beteiligten Antennenelemente ausgenutzt werden. Bei einem Radarsensor mit einer optischen Linse sind beispielsweise die mehreren Sende- und Empfangsantennen auf einer waagerechten Linie etwas versetzt zur optischen Achse der Linse angeordnet, so daß sich ihre Hauptabstrahlrichtungen und entsprechend ihre Hauptempfindlichkeitsrichtungen etwas voneinander unterscheiden. Durch Vergleich der Amplituden und/oder Phasen der aus den verschiedenen Pfaden (d. h. von den verschiedenen Sende- und Empfangsantennen) empfangenen Signale läßt sich dann der Azimutwinkel des Objekts bestimmen, d. h. der Richtungswinkel, unter dem das Objekt vom Sensor aus gesehen wird.

Bei fortgeschrittenen Radarsystemen für Kraftfahrzeuge wird verlangt, daß das System nicht nur auf bewegte Objekte, also insbesondere auf andere fahrenden Fahrzeuge reagiert, sondern auch auf stehende Objekte, wie z. B. stehende Fahrzeuge oder sonstige Hindernisse auf der Fahrbahn. Während fahrende Fahrzeuge relativ leicht anhand ihrer Eigenbewegung und der entsprechenden Differenz zwischen der gemessenen Relativgeschwindigkeit und der Fahrgeschwindigkeit des eigenen Fahrzeugs zu erkennen sind, ist es bei stehenden Objekten wesentlich schwieriger, die Relevanz der Objekte für die jeweilige Aufgabe des Fahrerassistenzsystems zu bewerten. In einer strukturreichen Umgebung, beispielsweise im Stadtverkehr, kommt hinzu, daß sich im allgemeinen eine beträchtliche Anzahl stehender Objekte im Ortungsbereich des Radarsensors befinden wird, wodurch die Auswertung der Vielzahl der Signale erheblich erschwert wird.

Aus diesen Gründen ist es wünschenswert, den Sichtbereich oder das Ortungsfeld des Radarsensors so zu gestalten, daß nach Möglichkeit von vornherein nur Signale von Objekten empfangen werden, die für die von dem Fahrerassistenzsystem zu bewältigende Aufgabe auch wirklich relevant sind. Insbesondere sollte folglich das Ortungsfeld so geformt werden, daß möglichst keine Radarechos von Objekten empfangen werden, die sich weit außerhalb der Fahrbahn befinden. Andererseits sollte ein Radarsensor (LRR; Long Range Radar), beispielsweise für ein Abstandsregelsystem (ACC), eine möglichst große Reichweite in der Größenordnung von etwa 200 m oder mehr haben. Aufgrund der unvermeidlichen Divergenz der Radarstrahlen ist es dann bei größeren Abständen kaum mehr möglich, das Ortungsfeld auf den unmittelbaren Fahrbahnbereich zu begrenzen.

Aus DE 10 2004 030 755 A1 ist es bekannt, bei einem Mehrstrahlradar, beispielsweise bei einem Radarsensor mit vier Sende- und Empfangsantennen, die Sendeleistung der beiden äußeren Antennen gegenüber der Sendeleistung der beiden inneren Antennen zu symmetrisch reduzieren. Auf diese Weise lassen sich mit den beiden inneren Antennen eine große Reichweite und ein unter großen Abständen noch relativ schmales Ortungsfeld erreichen, während mit den schwächeren Randstrahlen eine hinreichende Breite des Ortungsfeldes bei kleineren Abständen gewährleistet wird.

Die Sendeleistung der verschiedenen Strahlen läßt sich beispielsweise mit Hilfe der Konfiguration der zugehörigen Mischer einstellen. Typischerweise werden in Radarsensoren der hier betrachteten Art Transfermischer eingesetzt, bei denen ein Teil des Sendesignals, das zum Mischen mit dem empfangenen Signal verwendet wird, in die zur Antenne führende Leitung transferiert wird und somit über die Antenne abgestrahlt wird. Andererseits sind sogenannte Isolationsmischer bekannt, bei denen praktisch kein Transfer des Sendesignals zur Antenennleitung stattfindet. Die Antenne, der ein solcher Mischer zugeordnet ist, kann deshalb nur Signale empfangen, die von anderen Antennen gesendet wurden, und diese empfangenen Signale werden dann im Mischer mit dem Sendesignal gemischt. Zwischen reinen Transfermischern und reinen Isolationsmischern sind dabei alle denkbaren Abstufungen möglich. Die relative Stärke des Signals, das in die Antennenleitung transferiert wird, soll hier als "Transferleistung" bezeichnet werden.

Das Dokument EP 1804074 A1 beschreibt einen Radarsensor mit digitaler Strahlformung.

Die Dokumente EP 1345044 A1 sowie US 2004/0027305 A1 beschreiben jeweils Radarsensoren, bei denen die geometrische Anordnung der Sende- und Empfangsantennen auf der Platine gewisse Asymmetrien aufweist.

### Offenbarung der Erfindung

Aufgabe der Erfindung ist es, einen Radarsensor für Kraftfahrzeuge zu schaffen, mit dem sich auf vorteilhafte Weise eine angepaßte Form des Ortungsfeldes für den Einsatz in einem Doppelsensorsystem erreichen läßt.

Diese Aufgabe wird erfindungsgemäß durch die Kombination der Merkmale des Anspruchs 1 gelöst.

Die Erfindung ermöglicht somit, mit einfachen Mitteln, insbesondere unter Verwendung derselben Bauelemente, aus denen auch herkömmliche Radarsensoren mit symmetrischem Ortungsfeld aufgebaut sind, Radarsensoren mit asymmetrischem Ortungsfeld herzustellen, so daß sich das Ortungsfeld optimal an die jeweilige Aufgabe des betreffenden Sensors anpassen läßt.

Eine spezielle Anwendungsmöglichkeit der Erfindung besteht darin, ein Kraftfahrzeug mit zwei Radarsensoren auszurüsten, die auf der linken und rechten Seite des Fahrzeugs angeordnet sind und asymmetrische, beispielsweise zueinander spiegelbildliche Ortungsfelder haben. Durch die Überlagerung der beiden Ortungsfelder erhält man dann insgesamt ein breiteres Ortungsfeld ohne Einbußen in der Reichweite. Dadurch wird der tote Winkel im Nahbereich deutlich reduziert.

Besonders vorteilhaft ist dabei auch, daß in dem etwa für die Abstandsregelung besonders relevanten Bereich in der Nähe des Azimutwinkels null und bei großen und mittleren Abständen durch die Überlappung der Ortungsfelder der beiden Radarsensoren eine hohe Redundanz erreicht wird, was die Verfolgung, das sogenannte "Tracking" der Objekte von Meßzyklus zu Meßzyklus erleichtert. Darüber hinaus kann durch Abgleich der von den verschiedenen Radarsensoren erhaltenen Azimutwinkel für dasselbe Objekt die genaue Lage des Objekts präziser bestimmt werden.

Die Erfindung ist auf Sensoren mit einer beliebigen Anzahl von Sende- und Empfangsantennen anwendbar.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine Prinzipskizze eines idealtypischen Transfermischers;
- Figur 2: eine Prinzipskizze eines idealtypischen Isolationsmischers;
- Figur 3: eine Prinzipskizze eines Radarsensors gemäß der Erfindung;
- Figur 4: ein Antennendiagramm des Radarsensors gemäß Figur 3,
- Figur 5: ein nicht maßstäbliches Diagramm des Ortungsfeldes des Radarsensors nach Figur 3; und
- Figur 6: einen schematischen Grundriß eines Kraftfahrzeugs mit zwei erfindungsgemäßen Radarsensoren und zugehörigen Ortungsfeldern.

### Ausführungsformen der Erfindung

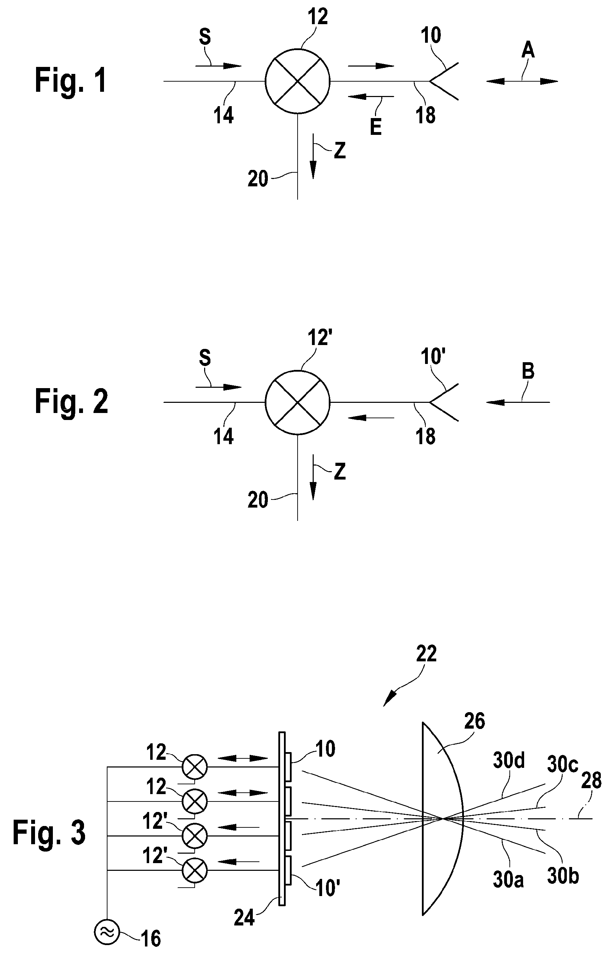

In Figur 1 ist ein vereinfachtes Schaltbild einer Antenne 10 und eines zugehörigen Mischers 12 eines Radarsensors dargestellt. Dem Mischer 12 wird über eine Speiseleitung 14 ein Sendesignal S eines in Figur 3 gezeigten Oszillators 16 zugeführt, beispielsweise ein Signal mit einer Frequenz in der Größenordnung von 76 GHz. Über eine Antennenleitung 18, die den Mischer 12 mit der Antenne 10 verbindet, erhält der Mischer ein von der Antenne 10 empfangenes Signal E, und durch Mischung dieser beiden Signale erzeugt der Mischer ein Zwischenfrequenzsignal Z, das über eine Ausgangsleitung 20 an eine nicht gezeigte Auswerteschaltung ausgegeben wird.

Bei dem Mischer 12 handelt es sich in der Praxis um ein integriertes Bauelement (MMIC; Monolithic Microwave Integrated Circuit), das in diesem Fall als Transfermischer konfiguriert ist. Das bedeutet, daß ein Teil der Leistung des Sendesignals S in die Antennenleitung 18 transferiert und dann über die Antenne 10 abgestrahlt wird, so daß die Antenne 10 als Sende- und Empfangsantenne arbeitet. Die entsprechenden Signalflüsse sind in Figur 1 durch Pfeile symbolisiert. Man erkennt, daß auf der Antennenleitung 18 zwei Signalflüsse in entgegengesetzter Richtung erfolgen. Entsprechend symbolisiert ein Doppelpfeil A, daß die Antenne 10 Radarstrahlung sowohl sendet als auch empfängt.

Figur 2 zeigt ein entsprechendes Schaltbild für eine Antenne 10' und einen zugehörigen Mischer 12'. Der Unterschied zu dem Schaltbild nach Figur 1 besteht nur darin, daß der Mischer 12' als Isolationsmischer konfiguriert ist. Das bedeutet, daß (im Idealfall) keine Leistung von der Speiseleitung 14 auf die Antennenleitung 18 transferiert wird. Die Antenne 10' arbeitet daher in diesem idealisierten Fall als reine Empfangsantenne, was durch einen einfachen Pfeil B symbolisiert wird. Entsprechend liegt auf der Antennenleitung 18 auch nur ein Signalfluß in einer Richtung vor, nämlich in Richtung auf den Mischer 12'.

In der Praxis kann auch der Mischer 12' nach Figur 2 einen geringen Anteil der Leistung des Sendesignals S auf die Antennenleitung 18 transferieren, so daß auch die Antenne 10' ein schwaches Signal sendet. Allgemein lassen sich MMICs so konfigurieren, daß jede Zwischenform zwischen einem reinen Transfermischer und einem reinen Isolationsmischer realisiert wird, d. h., die Transferleistung, also der Anteil der Leistung, die auf der Antennenleitung 18 transferiert wird, läßt sich nach Bedarf einstellen.

Figur 3 zeigt eine Prinzipskizze eines Radarsensors 22 gemäß einer Ausführungsform der Erfindung. Auf einer Platine 24 sind insgesamt vier Antennen 10, 10' so angeordnet, daß sie in gleichmäßigen Abständen auf einer in Einbaustellung waagerechten Linie liegen. In Abstand zu den Antennen 10 ist eine gemeinsame Linse 26 so angeordnet, daß die Antennen etwa in der Brennebene der Linse liegen. Die Linse 26 definiert eine optische Achse 28 des Radarsensors. Da die Antennen 10 unterschiedlich weit gegenüber der optischen Achse 28 versetzt sind, wird ihre Strahlung durch die Linse 26 zu vier Strahlen 30a - 30b gebündelt, die unter leicht unterschiedlichen Azimutwinkeln abgestrahlt werden.

Den beiden in Figur 3 oberen Antennen 10, die die in Emissionsrichtung rechten Strahlen 30a und 30b erzeugen, ist jeweils ein Mischer 12 zugeordnet, der als Transfermischer arbeitet. Den beiden anderen Antennen 10' ist dagegen jeweils ein Mischer 12' zugeordnet, der eine deutlich geringere Transferleistung hat und deshalb hier kurz als Isolationsmischer bezeichnet werden soll. Durch Doppelpfeile bzw. Pfeile in Figur 3 wird symbolisiert, daß die Antennen 10 als Sende- und Empfangsantennen arbeiten, während die Antennen 10' vorwiegend als Empfangsantennen arbeiten und dabei das Echo von Signalen empfangen, die von den beiden anderen Antennen 10 gesendet wurden.

Die Besonderheit des hier beschriebenen Radarsensors 22 besteht darin, daß die Anordnung der Antennen 10 und 10', die sich hinsichtlich der Transferleistung der zugehörigen Mischer 12, 12' unterscheiden, in Bezug auf die optische Achse 28 des Sensors asymmetrisch ist. Im gezeigten Beispiel liegen zwei Antennen 10 mit starker Sendeleistung auf einer Seite der optischen Achse, während auf der anderen Seite der optischen Achse zwei Antennen 10' mit schwacher Sendeleistung oder ohne jegliche Sendeleistung liegen.

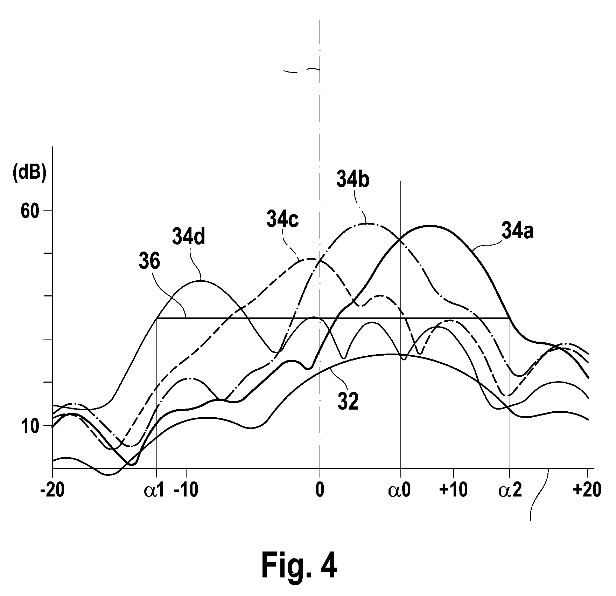

Das zugehörige Antennendiagramm ist in Figur 4 dargestellt. Die Kurve 32 in Figur 4 gibt den Sendegewinn des Radarsensors 22 als ganzes in Abhängigkeit vom Azimutwinkel an. Da die gesendete Radarstrahlung nur von den beiden Antennen 10 stammt, die zur selben Seite gegenüber der optischen Achse 28 versetzt sind, hat die Kurve 32 ihr Maximum nicht bei dem Azimutwinkel 0°, sondern bei einem bestimmten Azimutwinkel α0, der im gezeigten Beispiel etwa +6° beträgt. In bezug auf den Hauptabstrahlwinkel α 0 ist der durch die Kurve 32 angegebenen Sendegewinn im wesentlichen symmetrisch, da zu diesem Gewinn praktisch nur die beiden Antennen 10 beitragen, deren Mischer 12 dieselbe Konfiguration haben und etwa gleich starke Signale auf die Antennen transferieren.

Die Kurven 34a bis 34b in Figur 4 geben den Zweiwege-Gewinn (Sende- und Empfangsgewinn) für jeden einzelnen der Strahlen 30a bis 30d an. Die Kurven 34a und 34b, die zu den sendenden Antennen 10 gehören, haben die höchsten Hauptmaxima, und diese Maxima liegen symmetrisch zu dem Hauptabstrahlwinkel α0. Der Grund ist, daß diese Antennen in der Richtung ihre größte Empfindlichkeit haben, in der auch ihr Sendegewinn am größten ist.

Die Kurven 34c und 34d, die zu den nicht sendenden Antennen 10' gehören, haben dagegen schwächere Hauptmaxima, die zudem asymmetrisch zu dem Hauptabstrahlwinkel 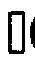 0 liegen. Außerdem ist bei der Kurve 34d das Hauptmaximum kleiner als bei der Kurve 34c, weil die zu der Kurve 34d gehörende Antenne ihre größte Empfindlichkeit für eine Richtung hat, in die von den beiden sendenden Antennen 10 nur relativ wenig an Leistung abgestrahlt wird.

Damit ein Objekt, das sich in einem vorgegebenen Abstand zu dem Radarsensor 22 befindet, überhaupt von dem Radarsensor geortet werden kann, muß der Zweiwege-Gewinn mindestens einer der vier Antennen oberhalb einer bestimmten Detektionsschwelle liegen. Ein Beispiel einer solchen Detektionsschwelle ist in Figur 4 als eine waagerechte Linie 36 dargestellt. Die Schnittpunkte dieser Detektionsschwelle mit den Kurven 34a und 34d, die zu den beiden Randstrahlen 30a und 30d des Radarsensors gehören, definieren Intervallgrenzen α1, α2 eines Ortungsbereiches, den der Radarsensor 22 für diesen vorgegebenen Abstand aufweist. Es ist zu erkennen, daß dieser Ortungsbereich nicht nur asymmetrisch in bezug auf den Azimutwinkel 0° ist, sondern auch asymmetrisch in bezug auf den Hauptabstrahlwinkel α0. Die linke Grenze α1 des Ortungsbereiches hat von α0 einen Winkelabstand von etwa 18°, während die rechte Grenze α2 von α0 nur einen Abstand von etwa 8° hat.

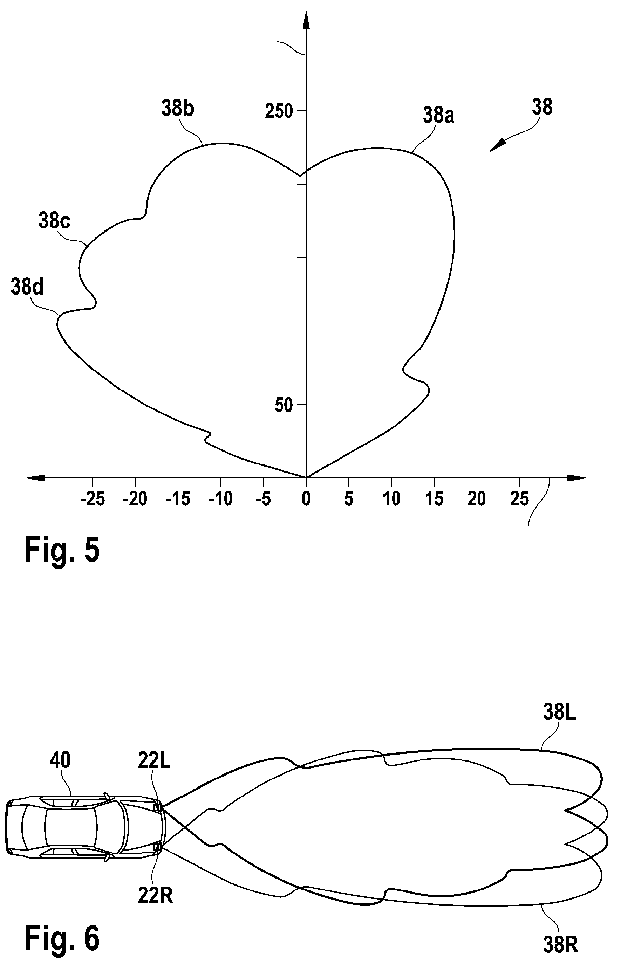

Wenn man für jeden denkbaren Objektabstand eine der Ortungsschwelle 36 entsprechende Ortungsschwelle und die zugehörigen Grenzen des Ortungsbereiches bestimmt, erhält man insgesamt ein Ortungsfeld 38, wie es für den hier beschriebenen Sensor in Figur 5 dargestellt ist. Das Ortungsfeld 38 ist hier in einem Koordinatensystem gezeigt, dessen mit "Entfernung" bezeichnete X-Achse parallel zur Längsachse des Kraftfahrzeugs verläuft, während die mit "Lateralversatz" bezeichnete Y-Achse der Querachse des Fahrzeugs entspricht. Dabei wurde in diesem Beispiel angenommen, daß der Radarsensor 22 so in das Fahrzeug eingebaut ist, daß die Fahrzeuglängsachse (Y-Achse) nicht dem Azimutwinkel 0°, sondern vielmehr dem Hauptabstrahlwinkel α0 entspricht. Mit anderen Worten, die durch den Versatz der beiden sendenden Antennen 10 verursachte Winkelabweichung der Hauptabstrahlrichtung wurde durch entsprechenden Einbau des Radarsensors weitgehend kompensiert.

Nicht kompensiert wird dagegen die Asymmetrie, die sich durch die unterschiedliche Zuordnung der Antennen zu den Mischern 12 und 12' ergibt und die zu dem asymmetrischen Bild der Kurven 34a bis 34d in Figur 4 führt. Diese Asymmetrie findet sich in dem Ortungsfeld in Figur 5 wieder. Insbesondere erkennt man, daß das Ortungsfeld auf der rechten Seite nur bis zu Lateralversätzen von etwa 15 m reicht, während es auf der linken Seite bis zu Lateralversätzen von etwa 25 m reicht. Auf der linken Seite weist das Ortungsfeld zwei "Ausstülpungen" 38c, 38d auf, die den Hauptmaxima der Kurven 34c und 34d in Figur 4 entsprechen und die auf der rechten Seite fehlen. In der Nähe der Hauptabstrahlrichtung weist das Ortungsfeld 38 zwei Hauptkeulen 38a, 38b auf, die den Hauptmaxima der Kurven 34a, 34b in Figur 4 entsprechen.

In Figur 6 ist schematisch ein Grundriß eines Kraftfahrzeugs 40 gezeigt, bei dem im Bereich der vorderen Stoßstange zwei Radarsensoren 22L und 22R eingebaut sind, je einer auf der linken und der rechten Fahrzeugseite. Diese beiden Radarsensoren 22L, 22R haben im Prinzip den gleichen Aufbau wie der in Figur 3 dargestellte Radarsensor 22, sind jedoch spiegelbildlich zueinander konfiguriert, so daß folglich auch ihre Ortungsfelder 38L, 38R zueinander spiegelbildlich sind. Außerdem sind die beiden Ortungsfelder 38L und 38R entsprechend dem Versatz der Radarsensoren 22L und 22R seitlich gegeneinander versetzt. Jedes einzelne der Ortungsfelder 38L und 38R weist für sich genommen die gleiche Asymmetrie wie das Ortungsfeld 38 in Figur 5 auf. Aufgrund der spiegelbildlichen Anordnung der Sensoren wird jedoch insgesamt wieder ein symmetrisches Ortungsfeld für das aus zwei Sensoren bestehende Ortungssystem als Ganzes erreicht.

Die Überlagerung zweier asymmetrischer und im wesentlichen zueinander spiegelbildlicher Ortungsfelder hat eine Reihe wesentlicher Vorteile.

Zum einen läßt sich so erreichen, daß das Gesamt-Ortungsfeld über einen relativ großen Entfernungsbereich hinweg eine verhältnismäßig konstante Breite hat. So läßt sich eine ausreichende Ortungstiefe erreichen, ohne daß mit zunehmendem Abstand immer mehr irrelevante, abseits der Fahrbahn liegende Objekte in das Blickfeld gelangen, während andererseits bei geringen Abständen eine praktisch lückenlose Überwachung des Vorfelds ermöglicht wird, ohne daß nennenswerte tote Winkel auftreten.

In einem relativ großen Kernbereich jedes der Ortungsfelder 38L und 38R kann ein Objekt mit mindestens zwei Antennen geortet werden, so daß durch Auswertung der Amplituden und Phasen eine Bestimmung des Azimutwinkels des Objekts möglich ist. In dem Bereich, in dem sich die Ortungsfelder 38L und 38R überlappen, können zudem die gemessenen Abstände und Relativgeschwindigkeiten und auch die Azimutwinkel (letztere unter Berücksichtigung des Versatzes zwischen den Radarsensoren 22L und 22R) miteinander abgeglichen werden, so daß eine höhere Meßgenauigkeit und Zuverlässigkeit erreicht wird. Zur Kontrolle können die gemessenen Azimutwinkel der Objekte zusätzlich auch durch Triangulation berechnet werden. Auch eine etwaige Fehljustierung eines der beiden Radarsensoren 22L, 22R läßt sich auf diese Weise detektieren und rechnerisch kompensieren.

## Patentansprüche

1. Radarsensor für Kraftfahrzeuge, mit mehreren Sende- und Empfangsantennen (10, 10'), die sich in ihrer azimutalen Richtcharakteristik unterscheiden und denen jeweils ein Mischer (12, 12') zugeordnet ist, der ein Sendesignal (S) mit einem empfangenen Signal (E) mischt, wobei mindestens einer (12) der Mischer ein Transfermischer ist und mindestens ein anderer (12') der Mischer eine geringere Transferleistung hat, wobei die Zuordnung der Sende- und Empfangsantennen (10, 10') zu den sich in ihrer Transferleistung unterscheidenden Mischern (12, 12') in Bezug auf die optische Achse (28) asymmetrisch ist, **dadurch gekennzeichnet, daß** er eine gerade Anzahl von Sende- und Empfangsantennen (10, 10') aufweist, und daß zwei der Mischer (12) für eine Hälfte der Sende- und Empfangsantennen (10) als Transfermischer, also als Antennen mit starker Sendeleistungauf einer Seite der optischen Achse (28) konfiguriert sind, während die zwei Mischer (12') für die andere Hälfte der Sende- und Empfangsantennen (10'), also auf der anderen Seite der optischen Achse (28) als Isolationsmischer, als Antennen (10') mit schwacher Sendeleistungoder ohne jegliche Sendeleistung, konfiguriert sind und eine kleinere Transferleistung haben als die als Transfermischer konfigurierten Antennen.

## Claims

1. Radar sensor for motor vehicles, comprising a plurality of transmitting and receiving antennas (10, 10'), which differ in their azimuthal directional characteristic and to which a respective mixer (12, 12') is assigned which mixes a transmission signal (S) with a received signal (E), wherein at least one (12) of the mixers is a transfer mixer and at least another (12') of the mixers has a lower transfer power, wherein the assignment of the transmitting and receiving antennas (10, 10') to the mixers (12, 12') that differ in their transfer power is asymmetrical in relation to the optical axis (28), **characterized in that** the radar sensor comprises an even number of transmitting and receiving antennas (10, 10'), and **in that** two of the mixers (12) for one half of the transmitting and receiving antennas (10) are configured as transfer mixers, that is to say as antennas having strong transmission power on one side of the optical axis (28), while the two mixers (12') for the other half of the transmitting and receiving antennas (10'), that is to say on the other side of the optical axis (28), are configured as isolation mixers, as antennas (10') having weak transmission power or without any transmission power, and have a lower transfer power than the antennas configured as transfer mixers.

## Revendications

1. Détecteur radar pour véhicules automobiles qui présente plusieurs antennes d'émission et de réception (10, 10') qui diffèrent par leur caractéristique de directivité azimutale et à chacune desquelles est attribué un mélangeur (12, 12') qui mélange un signal d'émission (S) avec un signal reçu (E), dans lequel au moins un (12) des mélangeurs est un mélangeur de transfert et au moins un autre (12') des mélangeurs présente une plus faible puissance de transfert, dans lequel l'attribution des antennes d'émission et de réception (10, 10') aux mélangeurs (12, 12') qui diffèrent par leur puissance de transfert est asymétrique par rapport à l'axe optique (28), **caractérisé en ce qu'**il comporte un nombre pair d'antennes d'émission et de réception (10, 10') et **en ce que** deux des mélangeurs (12) destinés à une moitié des antennes d'émission et de réception (10) sont configurés en tant que mélangeurs de transfert, et par conséquent en tant qu'antennes ayant une plus forte puissance d'émission d'un côté de l'axe optique (28), tandis que les deux mélangeurs (12') destinés à l'autre moitié des antennes d'émission et de réception (10'), par conséquent, de l'autre côté de l'axe optique (28), sont configurés en tant que mélangeurs à isolation, en tant qu'antennes (10') ayant une plus faible puissance d'émission ou sans aucune puissance d'émission, et **en ce qu'**ils ont une plus faible puissance de transfert que les antennes configurées en tant que mélangeurs de transfert.
